# EUROPÄISCHE PATENTANMELDUNG

(11) **EP 2 108 495 A1**
(43) Veröffentlichungstag der Anmeldung: **14.10.2009**
(21) Anmeldenummer: 09450068.3
(22) Anmeldetag: 30.03.2009
(51) Int. Cl.: B29B 17/00, B30B 11/26

(54) **Vorrichtung und Verfahren zum Kompaktieren von bändchenförmigen Kunststoffabfällen**

(30) Priorität: 07.04.2008 AT 5502008
(71) Anmelder: STARLINGER & CO. GESELLSCHAFT MBH, 1060 Wien (AT)
(72) Erfinder: Brandstätter, Johann, 2564 Furth (AT); Mitterecker, Florian, 2540 Bad Vöslau (AT)
(74) Vertreter: Margotti, Herwig Franz

(57) **Zusammenfassung**

Eine Vorrichtung (1) zum Kompaktieren von Abfällen (A) aus Bändchen, Fasern und/oder Multifilamenten aus thermoplastischem Kunststoff, vorzugsweise Polypropylen (PP) und/oder Polyethylen (PE), umfasst:
einen Zwischenbehälter (2) zum Aufnehmen der Abfälle,
optional ein Ansauggebläse (4) zum Ansaugen der Abfälle in den Zwischenbehälter,
einen Presskolben (7), der im Zwischenbehälter aus einer Ruhestellung in Richtung (B) einer Austragsöffnung (8) hin und her bewegbar ist, um Kunststoffabfälle unter Kompaktierung zu einem Strang (20) aus der Austragsöffnung hinaus zu fördern,
eine an die Austragsöffnung angeschlossene Heizeinrichtung (13), durch die der kompaktierte Kunststoffabfallstrang (20) hindurch förderbar ist, wobei die Temperatur der Heizeinrichtung (13) so einstellbar ist, dass ein Oberflächenbereich (20a) des Kunststoffabfallstrangs (20) geschmolzen wird,
eine stromabwärts von der Heizeinrichtung angeordnete Schneideeinrichtung (16), um den Kunststoffabfallstrang quer zu seiner Förderrichtung abzuschneiden.

## Beschreibung

Die Erfindung betrifft eine Vorrichtung und ein Verfahren zum Kompaktieren von Abfällen aus Bändchen, Fasern und/oder Multifilamenten aus thermoplastischem Kunststoff, vorzugsweise Polypropylen (PP) und/oder Polyethylen (PE). Insbesondere betrifft die Erfindung eine Vorrichtung und ein Verfahren zum Kompaktieren von Abfällen aus gereckten Bändchen, Fasern und/oder Multifilamenten aus thermoplastischem Kunststoff, die aufgrund der ihnen durch den Reckvorgang uniaxial oder biaxial verliehenen Festigkeit besondere Probleme beim Recycling machen können.

Beim Anfahren oder der Wartung von Anlagen zur Herstellung von Bändchen, Fasern und/oder Multifilamenten aus thermoplastischem Kunststoff fallen diese Produkte als Abfall an, bis die Anlagenparameter ihre vorhergesehenen Werte erreicht haben. Herkömmlicherweise werden sie händisch oder mithilfe von Fördermitteln, wie z.B. einer Absaugvorrichtung, in einen Behälter transportiert, aus dem sie, wenn der Behälter voll ist, zu einer Recyclinganlage weiterbefördert werden. Dies geschieht aufgrund der schlechten Manipulierbarkeit von bandförmigem Abfall händisch, wobei zunächst der Behälter geöffnet werden muss, was aus Sicherheitsgründen das vorherige Abstellen der Fördermittel erfordert, und anschließend der Abfall mit Gabeln oder Rechen zum Einzug einer Recyclingmaschine getragen oder über den Boden geschliffen wird.

Diese Arbeit ist zeit- und kraftaufwändig und stellt aufgrund der in regelmäßigen Abständen erforderlichen Stilllegung von Abfalltransportmitteln ein Risiko für den klaglosen Betrieb der Anlage zur Herstellung von Bändchen, Fasern und/oder Multifilamenten aus thermoplastischem Kunststoffabfall dar. Es besteht somit das Bedürfnis nach einer Verbesserung der Nachteile des Standes der Technik.

Die vorliegende Erfindung löst diese Aufgabe durch Bereitstellen einer Vorrichtung und eines Verfahrens zum Kompaktieren von Abfällen aus Bändchen, Fasern und/oder Multifilamenten aus thermoplastischem Kunststoff mit den kennzeichnenden Merkmalen des Anspruchs 1 bzw. des Anspruchs 10.

Vorteilhafte Ausgestaltungen der Erfindung sind in den abhängigen Ansprüchen und der Beschreibung dargelegt.

Die erfindungsgemäße Vorrichtung zum Kompaktieren von Abfällen aus Bändchen, Fasern und/oder Multifilamenten aus thermoplastischem Kunststoff, vorzugsweise Polypropylen (PP) und/oder Polyethylen (PE) umfasst:
einen Zwischenbehälter zum Aufnehmen der Abfälle,
optional ein Ansauggebläse zum Ansaugen der Abfälle in den Zwischenbehälter,
einen Presskolben, der im Zwischenbehälter aus einer Ruhestellung in Richtung einer Austragsöffnung hin und her bewegbar ist, um Kunststoffabfälle unter Kompaktierung zu einem Strang aus der Austragsöffnung hinaus zu fördern,
eine an die Austragsöffnung angeschlossene Heizeinrichtung, durch die der kompaktierte Kunststoffabfallstrang hindurch förderbar ist, wobei die Temperatur der Heizeinrichtung so einstellbar ist, dass ein Oberflächenbereich des Kunststoffabfallstrangs geschmolzen wird, eine stromabwärts von der Heizeinrichtung angeordnete Schneideeinrichtung, um den Kunststoffabfallstrang quer zu seiner Förderrichtung abzuschneiden.

Das erfindungsgemäße Verfahren zum Kompaktieren von Abfällen aus Bändchen, Fasern und/oder Multifilamenten aus thermoplastischem Kunststoff, vorzugsweise Polypropylen (PP) und/oder Polyethylen (PE) umfasst:
das Kompaktieren der Kunststoffabfälle mittels eines Presskolbens zu einem Kunststoffabfallstrang,
das Austragen des Kunststoffabfallstrangs durch eine Heizeinrichtung hindurch,
das Erwärmen des Kunststoffabfallstrangs bis zum zumindest teilweise Schmelzen seiner Oberfläche,
das Abkühlen der geschmolzenen Oberfläche des Kunststoffabfallstrangs bis zur Verfestigung,
das Schneiden des Kunststoffabfallstrangs in Blöcke.

Die vorliegende Erfindung bietet die folgenden Vorteile gegenüber dem Stand der Technik:
■ Es ist nicht mehr notwendig, allfällige Ansauggebläse oder sonstige Abfalltransportvorrichtungen zwischen einer Bändchenherstellungsanlage und einem Abfall-Zwischenbehälter zu stoppen, wenn der Zwischenbehälter geleert werden soll.
■ Die schwere manuelle Arbeit des Leerens des Zwischenbehälters entfällt zur Gänze.
■ Das Abfallmaterial wird nicht durch Fremdkörper kontaminiert, da es nicht mehr über den Boden geschliffen wird. Dadurch werden Folgeschäden an Recycling-Maschinen vermieden.
■ Beim Transport vom Zwischenbehälter zur Recycling-Maschine bzw. bei einer Lagerung befindet sich der Kunststoffabfall bereits in einem verdichteten Zustand, wobei er z.B. nur mehr ein Zehntel des ursprünglichen Volumens einnimmt.
■ Die kompakten Abfall-Blöcke, die die erfindungsgemäße Kompaktierungsvorrichtung verlassen, sind leicht zu handhaben, weisen definierte Proportionen auf und können daher auch automatisch weiter gefördert werden und sind einfacher in Recycling-Maschinen zu beschicken.

Durch Vorsehen eines Stopfschiebers im Zwischenbehälter, der Kunststoffabfall in einen Erfassungsbereich des Presskolbens schiebt, wird sichergestellt, dass der Presskolben ausreichend Kunststoffabfallmaterial erhält. Indem vorgesehen wird, dass der Stopfschieber vom Erfassungsbereich des Presskolbens wegbewegt wird, wenn der Arbeitsdruck des Presskolbens eine obere Druckschwelle überschreitet, vermeidet man eine unerwünscht hohe Kompaktierung des Abfallmaterials.

Um zu verhindern, dass das Abfallmaterial unerwünscht stark komprimiert wird, ist in einer Ausführungsform der Erfindung vorgesehen, dass der Erfassungsbereich zumindest abschnittsweise einen Freiraum um den Presskolben bildet, in den bei Vorwärtsbewegung des Presskolbens Abfallmaterial ausweichen kann.

Es ist aus mehreren Gründen zweckmäßig, eine Begrenzung des Verdichtungsverhältnisses des Abfallmaterials vorzusehen. Dies kann erreicht werden, indem der Pressdruck des Presskolbens so eingestellt wird, dass die Kompaktierung des Abfallmaterials auf maximal ein Zwanzigstel, vorzugsweise maximal ein Fünfzehntel, des losen Volumens des Abfallmaterials erfolgt. Gründe für das Definieren einer oberen Grenze der Kompaktierung des Abfallmaterials sind das Vermeiden des Auftretens unerwünscht hoher Kräfte in der Kompaktierungsvorrichtung, die eine höhere Dimensionierung vieler Bauteile verlangen würden, das Vermeiden von übermäßigem Energieverbrauch beim Kompaktieren, das Vermeiden eines zu hohen Gewichtes des kompaktierten Endprodukts, das dessen Handhabung erschweren würde, sowie mögliche Probleme bei der Weiterverarbeitung des kompaktierten Abfallendprodukts, wenn dessen Dichte zu groß ist.

Wenn der Zwischenbehälter schräg nach unten zusammenlaufende Innenwände aufweist, und der Presskolben in einem unteren Bereich der schräg zusammenlaufenden Innenwände angeordnet ist, entfällt die Notwendigkeit zum Vorsehen mechanischer Fördereinrichtungen für den Abfall im Zwischenbehälter.

Indem der Presskolben mit einer Schneidkante versehen ist, die zur Erhöhung der Schneidleistung vorzugsweise wellenförmig oder zackenförmig ausgebildet ist, wird das Abfallmaterial während des Kompaktierens vorzerkleinert, was die spätere Endzerkleinerung in einer Recycling-Maschine erleichtert. Diese Ausführungsform ist insbesondere bei der Verarbeitung von gereckten Bändchen, Fasern und/oder Multifilamenten, streifen- oder flächenförmigen Gebilden aus thermoplastischem Kunststoff, die aufgrund der ihnen durch den Reckvorgang uniaxial oder biaxial verliehenen Festigkeit besondere Probleme beim Recycling machen können. Durch die Vorzerkleinerung wird das Recycling dieser Abfälle in nachfolgenden Recyclinganlagen wesentlich erleichtert.

In einer bevorzugten Ausführungsform der Erfindung wird mittels eines Drucksensor der momentane Arbeitsdruck des Presskolbens erfasst. Bei Absinken des momentanen Arbeitsdruckes unter eine untere Druckschwelle wird durch eine Steuereinrichtung ein Zurückfahren des Presskolbens in seine Ruhe-Stellung auslöst. Durch diese Maßnahme verhindert man ein Leerlaufen des Presskolbens und spart dadurch Energie.

Wenn die Heizeinrichtung als Heizkanal ausgebildet ist, durch den der Kunststoffabfallstrang hindurch förderbar ist, so kann die Oberfläche um den gesamte Umfang des Kunststoffabfallstrangs geschmolzen werden, während dieser durch den Heizkanal gefördert wird. Der Heizkanal wird in einer solchen Längserstreckung vorgesehen, dass in Abhängigkeit von der Fördergeschwindigkeit des Kunststoffabfallstrangs eine ausreichend lange Verweilzeit im Heizkanal und dadurch die Übertragung von ausreichend Wärmeenergie in das Abfallmaterial sichergestellt ist.

In einer bevorzugten Ausführungsform der Erfindung ist die Querschnittsfläche des Heizkanals zumindest so groß, vorzugsweise größer, als die Querschnittsfläche der Austragsöffnung. Keinesfalls sollte in der Förderstrecke des Abfallmaterials von der Austragsöffnung bis zum Verlassen des Auslaufkanals eine Querschnittsverengung vorgesehen werden. Es hat sich nämlich gezeigt, dass das - meist bändchen- oder schnitzelförmige - Abfallmaterial bei Vorsehen von Querschnittsverengungen in der Förderstrecke, die zu einer übermäßigen Verdichtung bzw. Stopfwirkung führen, dazu neigt, eine Federkraft zu entwickeln, die beim Zurückziehen des Presskolbens auch Teile des Abfallmaterials zurückdrückt. Somit pulsiert bei Verengungen in der Förderstrecke das Abfallmaterial im Einklang mit den Bewegungen des Presskolbens, anstatt vorwärts gefördert zu werden. Um dies zu verhindern, sollten keine Verengungen in der Förderstrecke vorhanden sein. Vielmehr kann es sogar zweckmäßig sein, am Übergang vom Heizkanal zum Auslaufkanal eine Querschnittserweiterung auszubilden.

Durch Vorsehen eines Geschwindigkeitssensor zur Erfassung der Austragsgeschwindigkeit des Kunststoffabfallstrangs kann die Austragsgeschwindigkeit kontinuierlich überwacht werden. Bevorzugt ist der Geschwindigkeitssensor im Auslaufkanal angeordnet. Durch diese Erfassung der Austragsgeschwindigkeit kann bei Ansteigen der Austragsgeschwindigkeit über eine obere Austragsgeschwindigkeitsschwelle die Vorwärtsbewegung des Presskolbens in Richtung der Austragsöffnung gestoppt und/oder ein Zurückfahren des Presskolbens in seine eingezogene Stellung ausgelöst werden, wodurch eine zu kurze Verweilzeit des Kunststoffabfallstrangs in der Heizeinrichtung vermieden wird.

Wenn im Zwischenbehälter ein Füllstandssensor zur Erfassung des Füllstands an Kunststoffabfall vorgesehen ist, besteht die Möglichkeit den Kompaktierungsprozess nur dann in Gang zu setzen, wenn es sich aus energetischer Hinsicht "lohnt", d.h. wenn der Kompaktierungsprozess ausreichend lange ablaufen kann, dass das notwendige Aufheizen der Heizeinrichtung in Kauf genommen wird.

Wenn die Temperatur in der Heizeinrichtung auf einer Ruhetemperatur, vorzugsweise zwischen 120 und 140 °C, gehalten wird, wenn sich der Presskolben in einer Ruhestellung befindet, und auf eine über der Ruhetemperatur liegende Arbeitstemperatur, vorzugsweise zwischen 160 und 190 °C, erhöht wird, bevor oder sobald der Presskolben zur Durchführung von Pressbewegungen aktiviert wird, vermeidet man das sonst notwendige Aufheizen von Umgebungstemperatur und erzielt kurze Latenzzeiten der Kompaktierungsvorrichtung.

Die Erfindung wird nun anhand eines Ausführungsbeispieles, auf das die Erfindung jedoch nicht beschränkt ist, unter Bezugnahme auf die Zeichnungen näher beschrieben. In den Zeichnungen zeigen:
Fig. 1 eine erfindungsgemäße Vorrichtung zum Kompaktieren von bändchenförmigen Abfällen aus thermoplastischem Kunststoff in der Perspektive;
Fig. 2 ein Detail der Kompaktierungsvorrichtung von Fig. 1 in der Perspektive; und
Fig. 3 das Detail von Fig. 2 im aufgeschnittenen Zustand, um die Querschnittserweiterungen entlang der Förderstrecke des Abfallmaterials deutlich zu machen.

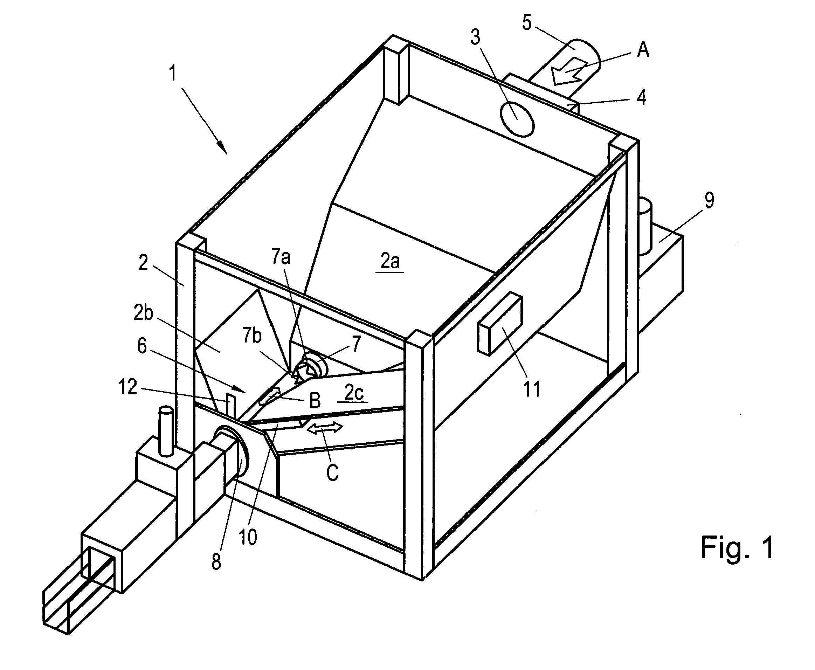

Die in Fig. 1 bis Fig. 3 dargestellte Ausführungsform einer erfindungsgemäßen Vorrichtung 1 zum Kompaktieren von Kunststoffabfällen ist spezifisch für Abfälle aus Bändchen, Fasern und/oder Multifilamenten aus thermoplastischem Kunststoff, vorzugsweise Polypropylen (PP) und/oder Polyethylen (PE) ausgebildet. Soweit in dieser Beschreibung das Wort Bändchen verwendet wird, sind damit auch die Begriffe "Fasern" und "Multifilamente" als inkludiert zu verstehen. Solche Bändchenabfälle fallen beispielsweise beim Hochfahren oder während der Wartung von Anlagen zur Herstellung von Bändchen aus Kunststofffolie an, wobei solche Bändchen im weiteren Herstellungsverfahren verstreckt, auf Spulen aufgewickelt und zu Geweben verarbeitet werden. Kennzeichnend für diese Kunststoffbändchenabfälle ist ihre lose Packungsdichte und die große Länge der einzelnen Bändchen, die zum Verwickeln neigen, so dass ihre Handhabung nach dem Stand der Technik nicht zufriedenstellend in den Griff zu bringen war.

Die erfindungsgemäße Kompaktierungsvorrichtung 1 weist einen Zwischenbehälter 2 auf. Zur besseren Übersichtlichkeit sind in der Zeichnung das Dach sowie zwei Seitenwände des Zwischenbehälters 2 weggeschnitten. Tatsächlich ist der Zwischenbehälter 2 jedoch dicht verschlossen und kann - je nach Größe - mit einem Mannloch oder einer Tür ausgestattet sein. Im vorliegenden Ausführungsform entspricht die Gestaltung des Zwischenbehälters 2 einem Standardcontainer. Der Zwischenbehälter 2 weist einen Einlass 3 auf, durch den der bändchenförmige Kunststoffabfall (Pfeil A) eingebracht wird. Ein Ansauggebläse 4 zum Ansaugen der Abfälle in den Zwischenbehälter 2 ist schematisch am Einlass 3 dargestellt. Es versteht sich jedoch, dass die Position des Ansauggebläses 4 nicht auf den Einlass 3 beschränkt ist, sondern auch vom Zwischenbehälter 2 entfernt an einem Förderrohr 5 oder innerhalb des Zwischenbehälters 2 vorgesehen sein kann. Alternativ dazu ist ein separater Durchgang an einer Wand des Zwischenbehälters 2 vorgesehen, durch den das außerhalb angebrachte Ansauggebläse 4 mit dem Inneren des Zwischenbehälters 2 kommuniziert und diesen unter Unterdruck setzt, so dass durch das Förderrohr 5 und den Einlass 3 bändchenförmige Kunststoffabfälle A angesaugt werden.

Der Zwischenbehälter 2 weist schräg nach unten zusammenlaufende Innenwände 2a, 2b, 2c auf, durch deren Schrägstellung in den Innenraum des Zwischenbehälters 2 eingebrachte Kunststoffabfälle, die generell eine glatte Oberfläche aufweisen, aufgrund der Schwerkraft und gegebenenfalls unterstützt durch Luftströme des Ansauggebläses 4, nach unten in einen so genannten Erfassungsbereich 6 rutschen. In diesem Erfassungsbereich ist ein Presskolben 7 angeordnet, der aus der in Fig. 1 dargestellten zurückgezogenen Ruhestellung entlang des Doppelpfeils B nach vorne zu einer Austragsöffnung 8 bewegt werden kann und bei dieser Bewegung im Erfassungsbereich 6 vorhandenen Kunststoffabfall erfasst, mitnimmt, dabei kompaktiert und durch die Austragsöffnung 8 hindurchpresst. Ein typisches, bei diesem Pressvorgang erzielbares Verdichtungsverhältnis des Abfalls ist 1:10. Ein Verdichtungsverhältnis über 1:20, vorzugsweise 1:15, ist aus den eingangs erwähnten Gründen unerwünscht und wird durch entsprechende Begrenzung des Pressdrucks des Presskolbens 7 vermieden. Der Presskolben 7 weist einen Presskopf 7a auf, der an seinem Umfang eine wellenförmige oder gezackte Schneidkante 7b besitzt. Aufgrund dieser Ausgestaltung wird der Presskopf 7a auch als Schneidkopf oder Schneidkrone bezeichnet. Die Schneidfunktion ist sehr erwünscht, da die bändchenförmigen Kunststoffabfälle sehr zum Verheddern neigen und eine große Länge besitzen. Durch das durch die Bewegung des Presskolbens 7 hervorgerufene Schneiden der Bändchen findet bereits eine Vorzerkleinerung statt, die die Beschickung in einer nachfolgenden Recycling-Maschine erleichtert.

Der Presskolben 7 wird durch eine Antriebsvorrichtung 9, wie z.B. eine Hydraulikeinheit, im Betrieb wiederholt vor und zurück bewegt, wobei bei jeder Zurückbewegung Abfallmaterial in den Erfassungsbereich 6 nachrutscht und bei der nächsten Vorwärtsbewegung des Presskolbens 7 wieder kompaktiert wird. Das Nachrutschen des Abfallmaterials nach unten entlang der schrägen Innenwände 2a, 2b, 2c des Zwischenbehälters 2 wird durch einen Stopfschieber 10 aktiv unterstützt, der in die schräge Innenwand 2c integriert ist und in der Ebene der Innenwand 2c vor und zurückbewegbar ist, siehe Doppelpfeil C. Die Vorwärtsbewegung des Stopfschiebers führt Abfallmaterial in den Erfassungsbereich 6 zu. Der Stopfschieber 10 ist nur so weit nach vorne bewegbar, dass er nicht mit dem Presskolben 7 kollidiert. Bei der Rückwärtsbewegung des Stopfschiebers 10 vergrößert sich der Freiraum im Erfassungsbereich 6, wodurch bei der Bewegung des Presskolbens 7 zur Austragsöffnung 8 Abfallmaterial seitlich ausweichen kann, wodurch eine übermäßig starke Kompaktierung vermieden wird. Auch der Stopfschieber 10 kann von der Antriebseinheit 9 angetrieben werden, seine Leistung ist allerdings geringer als jene des Presskolbens. Bei einer beispielhaften Dimensionierung weist der Presskolben einen Durchmesser des Presskopfs 7a von 200 mm auf. Der Hub beträgt 1100 mm, die Presskraft 10 Tonnen. Bei dieser Konfiguration ist ein Arbeitsdruck auf das Abfallmaterial von 200 bar realisierbar. Für den Stopfschieber findet man mit einem Pressdruck von 40 bar das Auslangen. Das bändchenförmige Abfallmaterial aus Kunststoff wird dabei mit dem Faktor 10 verdichtet und es bildet sich an der Austragsöffnung 8 ein Strang des kompaktierten Kunststoffabfalls, der beispielsweise eine Dichte von 200 - 400 kg/m³ besitzt. In den Presskolben 7 ist ein Drucksensor (in der Zeichnung nicht dargestellt) integriert, der kontinuierlich den Arbeitsdruck des Presskolbens 7 erfasst und seine Signale an eine zentrale Steuereinrichtung 11 sendet, die z.B. als speicherprogrammierbare Steuerung ausgebildet ist. Diese Steuereinrichtung 11 überwacht den Arbeitsdruck des Presskolbens. Überschreitet er eine obere Arbeitsdruckschwelle, so ist zu erwarten, dass die Verdichtung des Kunststoffabfalls unerwünscht hohe Ausmaße annimmt. Um dies zu vermeiden, veranlasst die Steuereinrichtung 11 zunächst das Zurückziehen des Stopfschiebers 10, so dass das Kunststoffmaterial Raum zum Ausweichen vor dem Presskopf 7a vorfindet. Alternativ dazu oder zusätzlich wird die Bewegung des Presskolbens 7 zur Austragsöffnung 8 gestoppt oder der Presskolben 7 in seine Ruhestellung zurückbewegt, wodurch sich das bereits komprimierte Abfallmaterial wieder etwas entspannen kann.

Damit nicht der umgekehrte Fall eintritt, nämlich, dass der Presskolben 7 aufgrund von zu wenig oder überhaupt fehlendem Abfallmaterial im Erfassungsbereich 6 leer läuft, überwacht die Steuereinrichtung 11 den Arbeitsdruck auch bezüglich einer unteren Arbeitsdruckschwelle. Wird diese unterschritten, so wird der Presskolben 7 in seine Ruhestellung zurückbewegt und der Stopfschieber 10 mehrmals vor und zurück bewegt, um ausreichend Abfallmaterial in den Erfassungsbereich 6 zu bringen.

Um sicherzustellen, dass bei Aufnahme des Pressvorgangs so viel Material im Zwischenbehälter 2 vorgesehen ist, dass sich das Anfahren des Presskolbens 7 überhaupt lohnt, ist ein Füllstandssensor 12 vorgesehen, der den Füllstand an Kunststoffabfall im Zwischenbehälter 2 überwacht und seine Signale an die Steuereinrichtung 11 sendet. Diese veranlasst die Aktivierung des Presskolbens 7 nur dann, wenn die Kunststoffabfallmenge eine vorgegebene Mindestmenge überschreitet. Wenn der Presskolben 7 aktiviert ist, so wird der Pressvorgang aber aufrecht erhalten, bis das Abfallmaterial im Zwischenbehälter 2 so weit abgearbeitet ist, dass keine ausreichende Kompaktierung mehr erreicht werden kann. Dann wird der Presskolben 7 gestoppt, bis wieder der erwünschte Füllstand an Abfallmaterial im Zwischenbehälter 2 erreicht ist. In diesem Ausführungsbeispiel ist der Füllstandssensor 12 ein optischer Sensor, der an der Außenseite des Zwischenbehälters 2 angeordnet ist und durch ein Sichtfenster 12a hindurch das Innere des Zwischenbehälters 2 abfühlt.

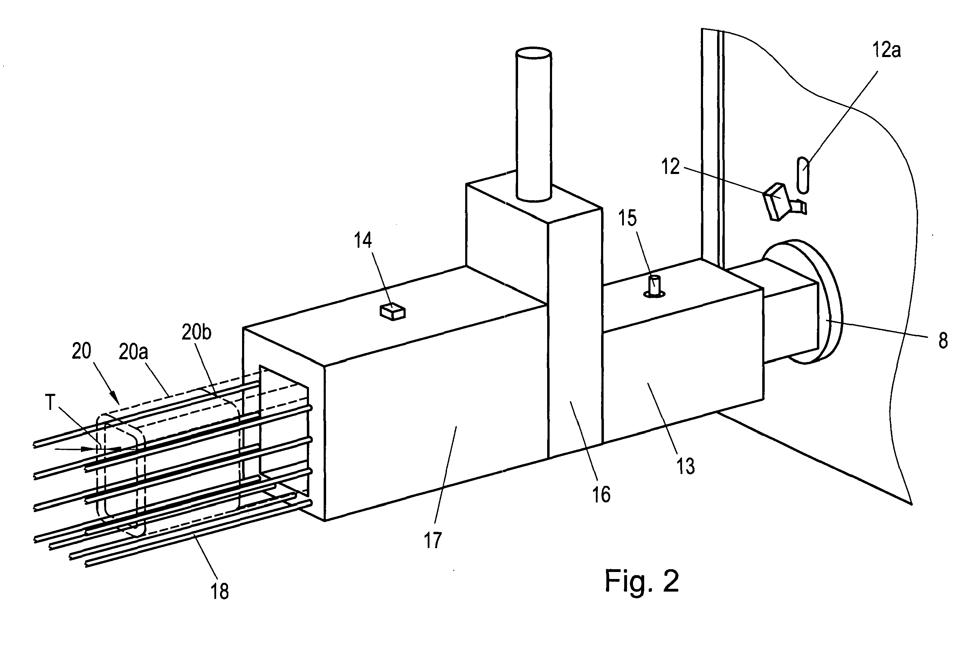

Der kompaktierte Strang aus Kunststoffabfällen wird bei Vorwärtsbewegung des Presskolbens 7 durch die Austragsöffnung 8 hindurch aus dem Zwischenbehälter 2 hinausgeschoben und gelangt in eine an die Austragsöffnung 8 angeflanschte Heizeinrichtung 13. Diese Heizeinrichtung 13 ist als Heizkanal mit quadratischem Querschnitt ausgebildet, der gleichzeitig dem Strang aus Kunststoffabfällen einen quadratischen Querschnitt verleiht und mit seinen erwärmten Innenflächen Wärmeenergie auf die Oberfläche 20a des Kunststoffabfallstrangs 20 überträgt (siehe Fig. 2, in der der Kunststoffabfallstrangs 20 strichliert dargestellt ist). Die Temperatur der Heizeinrichtung 13 ist, überwacht von Temperaturfühlern 15, so eingestellt, dass bei der durch die intermittierende Vorschubgeschwindigkeit des Presskolbens 7 vorgegebenen Verweilzeit in der Heizeinrichtung 13 zumindest ein Oberflächenbereich 20a des Kunststoffabfallstrangs 20 geschmolzen und nach der Heizeinrichtung 13 durch Abkühlen wieder verfestigt wird. Durch das Schmelzen und Verfestigen werden die an der Oberfläche des Kunststoffabfallstrangs bzw. oberflächennah liegenden Kunststoffbändchen miteinander innig verbunden und umgeben den Strang wie ein starres Netz. Bei höherer Wärmezufuhr durch die Heizeinrichtung 13 schmilzt das Kunststoffmaterial ausgehend von der Oberfläche des Strangs bis in eine Tiefe T und umgibt nach dem Erstarren den innen liegenden Bereich des Kunststoffabfallstrangs wie eine Haut. Üblicherweise beträgt die Tiefe T weniger als 2 mm und liegt meist im Bereich zwischen 0,5 und 1 mm. In einer bevorzugten Ausführungsform der Erfindung wird der Maximalwert der Tiefe T auf 2 %, noch bevorzugter 1 % des Durchmessers des Strangs aus Kunststoffmaterial festgelegt. Wenn der Strang eine von der Kreisform abweichende Querschnittsfläche aufweist, wird der größte Durchmesser als Referenz genommen, z.B. bei einem quadratischen Querschnitt die Diagonale. Es ist zu betonen, dass ein vollständiges Schmelzen des Kunststoffinaterials, d.h. eine Homogenisierung, unerwünscht ist, da ein solches Produkt eine viel zu hohe Dichte (ca. 900 kg/m³) hätte, um für die Zwecke der Erfindung sinnvoll handhabbar oder weiter verarbeitbar zu sein.

An einem Auslaufkanal 17 ist zumindest ein Geschwindigkeitssensor 14 vorgesehen, der die Austragsgeschwindigkeit des Kunststoffabfallstrangs misst und diese Messwerte an die Steuereinrichtung 11 weiterleitet. Überschreitet die Austragsgeschwindigkeit eine obere Austragsgeschwindigkeitsschwelle, so veranlasst die Steuereinrichtung 11 die Verlangsamung der Vorwärtsbewegung des Presskolbens 7 in Richtung der Austragsöffnung bzw. stoppt den Vorschub überhaupt und/oder löst ein Zurückfahren des Presskolbens 7 in seine zurückgezogene Stellung aus. Auf diese Weise wird eine ausreichend lange Verweildauer des Kunststoffabfallstrangs in der Heizeinrichtung 13 sichergestellt, damit die Oberfläche des Strangs verlässlich schmilzt. Der Geschwindigkeitssensor 14 ist vorzugsweise als Zählrad ausgebildet.

Stromabwärts von der Heizeinrichtung 13 ist eine Schneideeinrichtung 16 angeordnet, die den Kunststoffabfallstrang 20 quer zu seiner Förderrichtung abschneidet (siehe Schnittfläche 20b). An die Schneideeinrichtung 16 schließt sich ein Auslaufkanal 17 an, in der der Kunststoffabfallstrang 20 weiter abgekühlt wird, so dass er beim Verlassen des Auslaufkanals 17 ohne Verbrennungsgefahr angegriffen werden kann. An den Auslaufkanal 17 schließt sich eine U-förmige Förderrinne 18 an, auf der die geschnittenen Blöcke des Kunststoffabfallstrangs entweder zu einem Fahrzeug, einem Lager, oder direkt zu einer Recycling-Maschine befördert werden können.

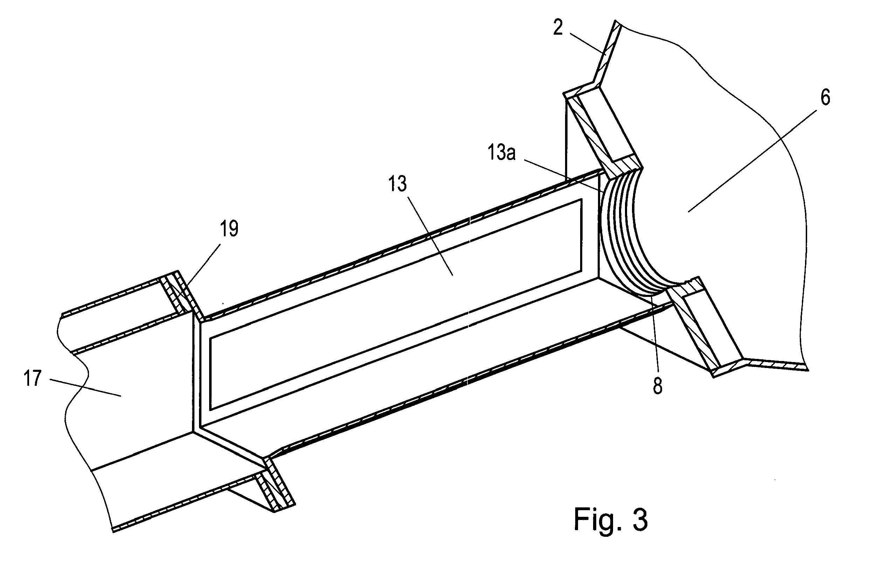

Fig. 3 zeigt eine schematische, perspektivische, teilweise aufgeschnittene Darstellung eines Förderabschnitts des Abfallmaterials in der erfindungsgemäßen Kompaktierungsvorrichtung 1, wobei dieser Förderabschnitt die Austragsöffnung 8 des Zwischenbehälters 2, die als Heizkanal ausgebildete Heizeinrichtung 13 und den Auslaufkanal 17 umfasst. Anhand dieser Darstellung ist ersichtlich, dass in diesem Förderabschnitt das Abfallmaterial keine Querschnittsverengungen durchlaufen muss, sondern vielmehr sich der Querschnitt des Förderabschnitts stufenweise zum Ausgang hin erweitert. Eine erste Querschnittserweiterung findet am Übergang 13a von der kreisrunden Austragsöffnung 8 zum Heizkanal mit quadratischem Querschnitt der Heizeinrichtung 13 statt. Die Seitenlänge des Heizkanals entspricht dem Durchmesser der Austragsöffnung 8. Eine weitere Querschnittserweiterung findet am durch ein Rahmenelement 19 gebildeten Übergang vom Heizkanal der Heizeinrichtung 13 zum Auslaufkanal 17 statt, der einen rechteckigen Querschnitt mit etwas größerer Breite als die Seitenlänge des Heizkanals aufweist. Durch diese Ausführung verhindert man eine übermäßige Stopfwirkung, die aufgrund der inhärenten Federkräfte des bändchenförmigen Abfallmaterials in einer pulsierenden Vor- und Rückbewegung des Abfallmaterials im Einklang mit der Vor- und Rückbewegung des Presskolbens 7 resultieren würde.

Vorzugsweise wird die erfindungsgemäße Kompaktierungsvorrichtung 1 in einem Standby-Modus betrieben, solange sich nicht genug Abfallmaterial in dem Zwischenbehälter 2 befindet. In diesem Standby-Modus wird die Temperatur in der Heizeinrichtung 13 auf einer Ruhetemperatur, vorzugsweise zwischen 120 und 140 °C, gehalten. Sobald der Füllstand an Abfallmaterial im Zwischenbehälter ausreichend ist, wird die Temperatur der Heizeinrichtung 13 auf eine Arbeitstemperatur, vorzugsweise zwischen 160 und 190 °C, erhöht. Wenn diese Arbeitstemperatur erreicht ist, wird der Presskolben 7 zur Durchführung von Pressbewegungen aktiviert.

## Patentansprüche

1. Vorrichtung (1) zum Kompaktieren von Abfällen (A) aus Bändchen, Fasern und/oder Multifilamenten aus thermoplastischem Kunststoff, vorzugsweise Polypropylen (PP) und/oder Polyethylen (PE), **gekennzeichnet durch**:
einen Zwischenbehälter (2) zum Aufnehmen der Abfälle,
optional ein Ansauggebläse (4) zum Ansaugen der Abfälle in den Zwischenbehälter,
einen Presskolben (7), der im Zwischenbehälter aus einer Ruhestellung in Richtung (B) einer Austragsöffnung (8) hin und her bewegbar ist, um Kunststoffabfälle unter Kompaktierung zu einem Strang (20) aus der Austragsöffnung hinaus zu fördern,
eine an die Austragsöffnung angeschlossene Heizeinrichtung (13), **durch** die der kompaktierte Kunststoffabfallstrang (20) hindurch förderbar ist, wobei die Temperatur der Heizeinrichtung (13) so einstellbar ist, dass ein Oberflächenbereich (20a) des Kunststoffabfallstrangs (20) geschmolzen wird,
eine stromabwärts von der Heizeinrichtung angeordnete Schneideeinrichtung (16), um den Kunststoffabfallstrang quer zu seiner Förderrichtung abzuschneiden.

2. Kompaktierungsvorrichtung nach Anspruch 1, **dadurch gekennzeichnet, dass** im Zwischenbehälter (2) ein Stopfschieber (10) angeordnet ist, der Kunststoffabfall in einen Erfassungsbereich (6) des Presskolbens (7) schiebt, wobei vorzugsweise der Erfassungsbereich (6) zumindest abschnittsweise einen Freiraum um den Presskolben (7) bildet, in den bei Vorwärtsbewegung des Presskolbens (7) Abfallmaterial (A) ausweichen kann.

3. Kompaktierungsvorrichtung nach einem der vorhergehenden Ansprüche, **dadurch gekennzeichnet, dass** der Pressdruck des Presskolbens (7) so eingestellt ist, dass die Kompaktierung des Abfallmaterials auf maximal ein Zwanzigstel, vorzugsweise maximal ein Fünfzehntel, des losen Volumens des Abfallmaterials erfolgt.

4. Kompaktierungsvorrichtung nach einem der vorhergehenden Ansprüche , **dadurch gekennzeichnet, dass** der Zwischenbehälter schräg nach unten zusammenlaufende Innenwände (2a, 2b, 2c) aufweist, wobei der Presskolben (7) in einem unteren Bereich der schräg zusammenlaufenden Innenwände angeordnet ist.

5. Kompaktierungsvorrichtung nach einem der vorhergehenden Ansprüche, **dadurch gekennzeichnet, dass** der Presskolben (7) eine Schneidkante (7b) aufweist, die vorzugsweise wellenförmig oder zackenförmig ausgebildet ist.

6. Kompaktierungsvorrichtung nach einem der vorhergehenden Ansprüche, **dadurch gekennzeichnet, dass** die Heizeinrichtung (13) als Heizkanal ausgebildet ist, durch den der Kunststoffabfallstrang hindurch förderbar ist.

7. Kompaktierungsvorrichtung nach Anspruch 6, **dadurch gekennzeichnet, dass** die Querschnittsfläche des Heizkanals zumindest so groß, vorzugsweise größer ist als die Querschnittsfläche der Austragsöffnung (8).

8. Kompaktierungsvorrichtung nach einem der vorhergehenden Ansprüche, **gekennzeichnet durch** einen Geschwindigkeitssensor (14) zur Erfassung der Austragsgeschwindigkeit des Kunststoffabfallstrangs (20), wobei vorzugsweise eine mit dem Geschwindigkeitssensor verbundene Steuereinrichtung (11) vorgesehen ist, die bei Ansteigen der Austragsgeschwindigkeit über eine obere Austragsgeschwindigkeitsschwelle die Vorwärtsbewegung des Presskolbens in Richtung der Austragsöffnung stoppt und/oder ein Zurückfahren des Presskolbens in seine eingezogene Stellung auslöst.

9. Kompaktierungsvorrichtung nach einem der vorhergehenden Ansprüche, **gekennzeichnet durch** einen Füllstandssensor (12) zur Erfassung des Füllstands an Kunststoffabfall im Zwischenbehälter.

10. Verfahren zum Kompaktieren von Abfällen aus Bändchen, Fasern und/oder Multifilamenten aus thermoplastischem Kunststoff, vorzugsweise Polypropylen (PP) und/oder Polyethylen (PE), **gekennzeichnet durch**
das Kompaktieren der Kunststoffabfälle mittels eines Presskolbens (7) zu einem Kunststoffabfallstrang,
das Austragen des Kunststoffabfallstrangs (20) **durch** eine Heizeinrichtung (13) hindurch, das Erwärmen des Kunststoffabfallstrangs bis zum zumindest teilweise Schmelzen seiner Oberfläche (20a),
das Abkühlen der geschmolzenen Oberfläche des Kunststoffabfallstrangs bis zur Verfestigung,
das Schneiden des Kunststoffabfallstrangs (20) in Blöcke.

11. Verfahren nach Anspruch 10, **gekennzeichnet durch** das Erfassen der Austragsgeschwindigkeit des Kunststoffabfallstrangs (20), wobei bei Ansteigen der Austragsgeschwindigkeit über eine obere Austragsgeschwindigkeitsschwelle die Pressbewegung des Presskolbens (20) verlangsamt, gestoppt und/oder der Presskolben in seine zurückgezogene Stellung bewegt wird.

12. Verfahren nach Anspruch 10 oder 11, **dadurch gekennzeichnet, dass** die Menge an vorhandenem zu kompaktierendem Kunststoffabfall überwacht und der Presskolben (7) nur dann zur Durchführung von Pressbewegungen aktiviert wird, wenn die Kunststoffabfallmenge eine vorgegebene Mindestmenge überschreitet.

13. Verfahren nach Anspruch 12, **dadurch gekennzeichnet, dass** die Temperatur in der Heizeinrichtung (13) auf einer Ruhetemperatur, vorzugsweise zwischen 120 und 140 °C, gehalten wird, wenn sich der Presskolben in einer Ruhestellung befindet, und auf eine über der Ruhetemperatur liegende Arbeitstemperatur, vorzugsweise zwischen 160 und 190 °C, erhöht wird, bevor oder sobald der Presskolben zur Durchführung von Pressbewegungen aktiviert wird.

14. Verfahren nach einem der Ansprüche 10 bis 13, **dadurch gekennzeichnet, dass** mittels eines Stopfschiebers (10) Kunststoffabfall in einen Erfassungsbereich (6) des Presskolbens geschoben wird, wobei vorzugsweise der Erfassungsbereich (6) zumindest abschnittsweise einen Freiraum um den Presskolben (7) bildet, in den bei Vorwärtsbewegung des Presskolbens (7) Abfallmaterial (A) ausweichen kann.

15. Verfahren nach Anspruch 14, **dadurch gekennzeichnet, dass** der Stopfschieber (10) vom Erfassungsbereich (6) des Presskolbens wegbewegt wird, wenn der Arbeitsdruck des Presskolbens (7) eine obere Druckschwelle überschreitet.

16. Verfahren nach einem der Ansprüche 10 bis 15, **dadurch gekennzeichnet, dass** der Pressdruck des Presskolbens (7) so eingestellt wird, dass die Kompaktierung des Abfallmaterials (8) auf maximal ein Zwanzigstel, vorzugsweise maximal ein Fünfzehntel, des losen Volumens des Abfallmaterials (8) erfolgt.

17. Verfahren nach einem der Ansprüche 10 bis 16, **dadurch gekennzeichnet, dass** der Kunststoffabfall während oder vor der Kompaktierung vorzerkleinert wird.
